# EUROPÄISCHE PATENTSCHRIFT

(11) **EP 2 459 970 B1**
(45) Veröffentlichungstag und Bekanntmachung des Hinweises auf die Patenterteilung: **07.11.2012**
(21) Anmeldenummer: 10729923.2
(22) Anmeldetag: 09.07.2010
(51) Int. Cl.: G01D 5/244, H02P 6/16, H02P 6/18

(54) **KOMMUTIERTER ELEKTRISCHER ANTRIEB UND VERFAHREN ZUR ANSTEUERUNG EINES KOMMUTIERTEN ELEKTROMOTORS**
COMMUTATED ELECTRIC DRIVE AND METHOD FOR CONTROLLING A COMMUTATED ELECTRIC MOTOR
ENTRAÎNEMENT ÉLECTRIQUE COMMUTÉ ET PROCÉDÉ DE COMMANDE D'UN MOTEUR ÉLECTRIQUE COMMUTÉ

(30) Priorität: 31.07.2009 DE 102009028170
(43) Veröffentlichungstag der Anmeldung: 06.06.2012
(73) Patentinhaber: Robert Bosch GmbH, 70442 Stuttgart (DE)
(72) Erfinder: CHABAUD, Antoine, 71732 Tamm (DE)
(86) Internationale Anmeldenummer: PCT/EP2010/059907
(87) Internationale Veröffentlichungsnummer: WO 2011/012427

(56) Entgegenhaltungen:
- WO-A2-2005/016217
- US-A1- 2006 279 244

## Beschreibung

### Stand der Technik

Die Erfindung geht aus von einem kommutierten elektrischen Antrieb und einem Verfahren zur Ansteuerung eines kommutierten Elektromotors nach der Gattung der unabhängigen Ansprüche. Hochstrom elektrisch kommutierte Antriebe kommen in heutigen Kraftfahrzeugen in vielerlei Anwendungen zum Einsatz, z.B. in der elektrischen Servolenkung oder im riemengetriebenen Starter. Zur Steuerung der Kommutierung ist die Kenntnis der relativen Lage zwischen dem Ständer- und dem Läuferfeld notwendig. Heutige Systeme setzen zur Ermittlung der Winkellage eine Kombination von AMR und digitalen Hall-Sensoren ein. So beschreibt die DE 102006060808 A1 einen Winkelsensor zur Drehwinkelerfassung eines um eine Drehachse drehbaren Bauteils, mit einem Gebermagneten, der koaxial mit dem drehbaren Bauteil verbindbar ist, mit im Bereich des Magnetfelds des Magneten fest angeordneten magnetoresistiven Sensorelement und digitalen Hall-Element. Aus der Kombination des Analogsignals des magnetoresistiven Sensorelements und des Digitalsignals ist ein Winkelsignal des 360 Grad Winkelbereichs erzeugbar. Solche Systeme können die Richtung, aber nicht die Amplitude des Feldes des Gebermagneten erfassen. Temperaturabhängigkeiten und die Alterung des Geberfeldes beeinträchtigen wegen der großen Hysterese des digitalen Hall-Sensors die 360 Grad Messeindeutigkeit des Winkelsensors.

### Offenbarung der Erfindung

Der erfindungsgemäße kommutierte elektrische Antrieb hat dagegen mehrere Vorteile. Erfindungsgemäß weist der Antrieb einen Magnetfelderzeuger, insbesondere einen Permanentmagnet auf einer Welle des Elektromotors und einen analogen Hall-Sensor ortsfest gegenüber dem Magnetfelderzeuger auf. Die Steuerung weist einen Speicher auf, in dem Kalibrierdaten des Hallsensors über eine volle Wellendrehung gespeichert werden. Im Betrieb des Antriebs werden aktuelle Messsignale des Hall-Sensors mit den Kalibrierdaten verglichen. Damit können aktuelle Umwelteinflüsse, die von den Kalibrierbedingungen abweichen, sowie eine Alterung des Feldes des Magnetfelderzeugers erkannt und berücksichtigt werden. Ein analoger Hall-Sensor hat als weiteren Vorteil gegenüber einem digitalen Hall-Sensor eine wesentlich kleinere Hysterese und ermöglicht daher eine bessere Winkelauflösung.

Der Magnetfelderzeuger ist vorzugsweise ein Permanentmagnet. Jedoch ist ebenso eine Ausführung möglich, bei der der Magnetfelderzeuger ein weichmagnetisches Blech, also ein Blech aus einem weichmagnetischen Material ist und ein Permanentmagnet ortsfest zum Stator des Elektromotors derart angeordnet ist, dass das rotierende Blech als Magnetfelderzeuger eine Störung des Magnetfelds des ortsfesten Permanentmagneten erzeugt, sozusagen ein magnetisches Störfeld erzeugt.

Die nun allgemein beschriebenen bevorzugten Ausgestaltungen der erfindungsgemäßen Vorrichtung gehen von einem Permanentmagneten als Magnetfelderzeuger aus. Eine bevorzugte Anordnung weist einen mehrpoligen Permanentmagnet symmetrisch zur Wellenmitte auf deren Stirnseite und einen linearen Hall-Sensor neben der Wellenmitte auf. Eine weitere vorteilhafte Anordnung hat einen mehrpoligen Permanentmagnet symmetrisch zur Wellenmitte und einen planaren Hall-Sensor auf der Wellenmitte. Der planare Hall-Sensor liefert ebenfalls ein analoges Signal proportional zur Feldstärke des Magnetfeldes und ermöglicht eine zusätzliche Designoption.

Eine weitere vorteilhafte Ausgestaltung der Erfindung weist einen mehrpoligen Permanentmagnet symmetrisch zur Wellenmitte, einen AMR Sensor auf der Wellenmitte und einen linearen Hall-Sensor neben der Wellenmitte auf. Mit Hilfe des AMR Sensors ist eine 360 Grad Eindeutigkeit der Rotorlage des Elektromotors erreichbar. Die entsprechende Designoption mit dem planaren Hall-Sensor weist einen mehrpoligen Permanentmagnet symmetrisch zur Wellenmitte, einen AMR Sensor auf der Wellenmitte und einen planaren Hall-Sensor axial oder seitlich neben dem AMR Sensor auf.

Die Steuerung der Ströme der einzelnen Wicklungen des Elektromotors aufgrund der ermittelten Winkellage des Rotors ist dem Fachmann bekannt und wird hier nicht thematisiert. Beschrieben werden nur die Möglichkeiten, die die Erfindung darüber hinaus eröffnet. Das erfindungsgemäße Verfahren zur Ansteuerung eines kommutierten Elektromotors weist folgende Schritte auf:
a) Kalibrieren der Sensoranordnung mittels Erfassen und Speichern eines mit dem Hall-Sensor gemessenen Kalibrier-Hall-Signals des Magnetfelds des Magnetfelderzeugers unter vorbestimmten Umgebungsbedingungen über eine Wellendrehung. Dies erfolgt vorteilhaft während der Herstellung des Antriebs. Das Kalibrier-Hall-Signal dient als Referenz für das im späteren Betrieb wiederholt gemessene Signal. Die folgenden Verfahrensschritte werden im Betrieb wiederholt.
b) Erzeugen eines aktuellen Hall-Signals des aktuellen Magnetfelds des Magnetfelderzeugers durch den Hall-Sensor. Diese Messung findet unter im Betrieb und damit unter den aktuellen Umgebungsbedingungen statt.
c) Vergleichen des Hall-Signals mit dem Kalibrier-Hall-Signal;
d) Ermitteln von Abweichungen des aktuellen Magnetfelds des Magnetfelderzeugers von dem Magnetfeld unter vorbestimmten Umgebungsbedingungen. Unterschiede der Magnetfelder entstehen aufgrund der unterschiedlichen Umgebungsbedingungen bei der Kalibrierung und im Betrieb sowie durch Alterung des Feldes des Permanentmagneten, das gilt für alle Anordnungen des Permanentmagneten sowohl auf der Welle als auch ortsfest zum Stator.
e) Ermitteln der Winkellage des Elektromotors aus dem Hall-Signal und den ermittelten Abweichungen des aktuellen Magnetfelds. Die ermittelten Abweichungen können zu einer Korrektur der Winkellage aus dem Hall-Signal führen.
f) Ansteuern des kommutierten Elektromotors aufgrund der Daten der ermittelten Winkellage.

Eine vorteilhafte Ausgestaltung der Erfindung sieht die Ermittlung der Entmagnetisierung des Permanentmagneten aus den ermittelten Abweichungen vor. Vorzugsweise wird ein Indikatorsignal bei zu geringer gemessener magnetischer Feldstärke des Permanentmagneten erzeugt. Vorteilhaft weist der Elektromotor einen AMR Sensor auf und das Signal des AMR Sensors wird zum Erreichen einer 360 Grad Eindeutigkeit verwendet. Das Kompensieren von magnetischen Störfeldern am Ort des Hall-Sensors durch Berücksichtigung bekannter Ströme durch Wicklungen des Elektromotors und der aktuellen Feldstärke des Permanentmagneten bei dem Kalibrieren und /oder bei dem Erzeugen des aktuellen Hall-Signals ist möglich.

Ausführungsbeispiele der Erfindung werden anhand der Zeichnungen erläutert, in denen
Fig. 1 eine schematische Darstellung einer Sensoranordnung gemäß der Erfindung zeigt;
Fig. 2 eine schematische Darstellung einer Sensoranordnung gemäß der Erfindung in einer zweiten Ausführungsform zeigt;
Fig. 3 eine schematische Darstellung einer Sensoranordnung gemäß der Erfindung in einer dritten Ausführungsform zeigt;
Fig. 4 eine schematische Darstellung einer Sensoranordnung gemäß der Erfindung in einer vierten Ausführungsform zeigt;
Fig. 5 ein Flußdiagramm des erfindungsgemäßen Verfahrens zeigt.

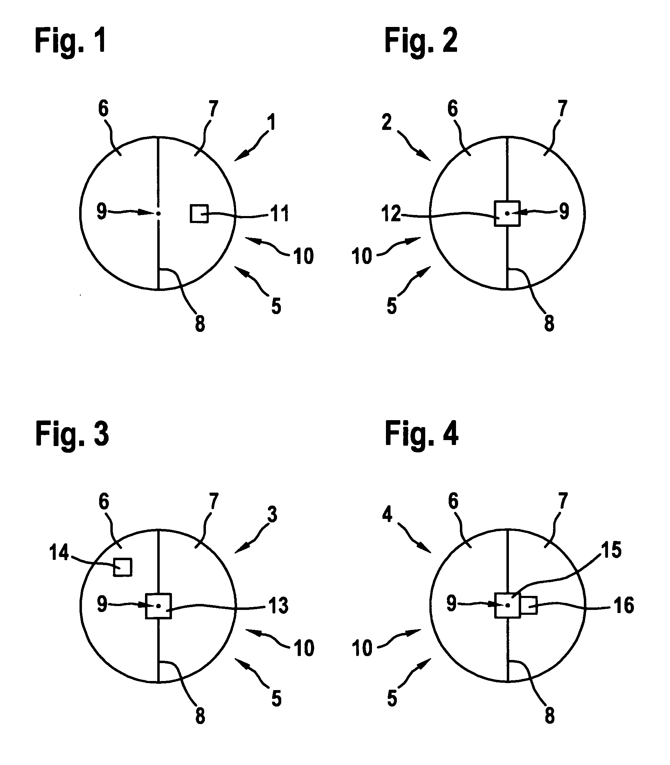

Ein erfindungsgemäßer kommutierter elektrischer Antrieb mit einem Elektromotor mit einer Sensoranordnung hat einen Magnetfelderzeuger, insbesondere einen Permanentmagnet, auf einer Welle des Elektromotors. Magnetische Sensoren sind ortsfest in Bezug auf einen Stator des Motors gegenüber dem mit der Welle drehenden Magnetfelderzeugers angebracht. Fig. 1-4 zeigen schematisch verschiedene Ausführungsformen von Sensoranordnungen 1, 2, 3, 4 gemäß der Erfindung jeweils in Seitenansicht von einer Stirnseite der Motorwelle, wobei hier der Magnetfelderzeuger ein Permanentmagnet ist und wobei zunächst die gemeinsamen Elemente der Ausführungsformen aufgeführt sind. Der Permanentmagnet 5 mit Polen 6 und 7, kenntlich durch die Poltrennungslinie 8, liegt symmetrisch zur Wellenmitte 9 auf der Motorwelle 10. Dazu sind die Arten und Lagen der magnetischen Sensoren dargestellt.

Fig. 1 zeigt eine Sensoranordnung 1 gemäß der Erfindung in einer ersten Ausführungsform. Der zweipolige Permanentmagnet 5 liegt symmetrisch zur Wellenmitte 9. Die Sensoranordnung 1 weist einen linearen Hall-Sensor 11 neben der Wellenmitte 9 auf, verschoben von der Wellenmitte 9 in Richtung der magnetischen Feldmitte des Permanentmagnet 5, senkrecht zur Poltrennungslinie 8.

In Fig. 2, die eine Sensoranordnung 2 gemäß der Erfindung in einer zweiten Ausführungsform zeigt, ist neben dem wieder symmetrisch zur Wellenmitte 9 liegenden zweipoligen Permanentmagnet 5 ein planarer Hall-Sensor 12 auf der Wellenmitte 9 angeordnet.

Fig. 3 zeigt eine Sensoranordnung 3 gemäß der Erfindung in einer dritten Ausführungsform. Der zweipolige Permanentmagnet 5 liegt wieder symmetrisch zur Wellenmitte 9. Ein AMR Sensor 13 ist auf der Wellenmitte 9 angeordnet. Ein linearer Hall-Sensor 14 ist neben der Wellenmitte 9 angeordnet, verschoben von der Wellenmitte 9 im Winkel von 45 Grad zur Poltrennungslinie 8.

In Fig. 4 ist eine Sensoranordnung 4 gemäß der Erfindung in einer vierten Ausführungsform dargestellt. Der zweipolige Permanentmagnet 5 liegt wieder symmetrisch zur Wellenmitte 9. Ein AMR Sensor 15 ist auf der Wellenmitte angeordnet und ein planarer Hall-Sensor 16 ist neben dem AMR Sensor 16 angeordnet, von der Wellenmitte 9 in einer Richtung senkrecht zur Poltrennungslinie 8.

Der Antrieb weist weiterhin eine Steuerung zur Ansteuerung von Wicklungen des Elektromotors auf, wobei die Steuerung einen Speicher zum Speichern eines mit dem Hall-Sensor 11, 12, 14, 16 gemessenen Kalibrier-Hall-Signals des Magnetfelds des Permanentmagneten 5 unter vorbestimmten Umgebungsbedingungen über eine Wellendrehung aufweist, und wobei die Steuerung eine Einrichtung zum Vergleichen eines mit dem Hall-Sensor gemessenen aktuellen Hall-Signals des aktuellen Magnetfelds des Permanentmagneten mit dem Kalibrier-Hall-Signal aufweist.

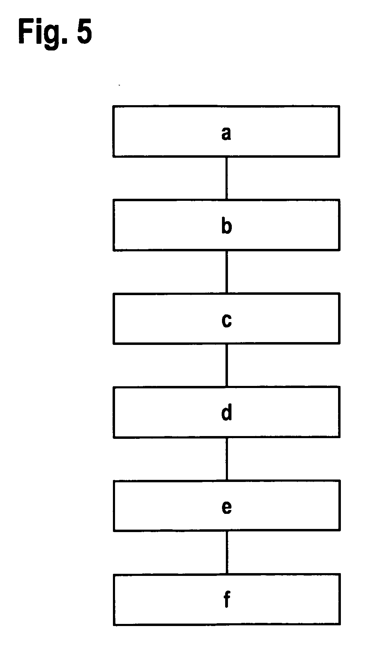

Fig. 5 zeigt ein Flußdiagramm des erfindungsgemäßen Verfahrens zur Ansteuerung des oben beschriebenen kommutierten Elektromotors. Das Verfahren beginnt mit Schritt
a) Kalibrieren der Sensoranordnung mittels Erfassen und Speichern eines mit dem Hall-Sensor gemessenen Kalibrier-Hall-Signals des Magnetfelds des Magnetfelderzeugers unter vorbestimmten Umgebungsbedingungen über eine Wellendrehung. Dieser Verfahrensschritt erfolgt während der Herstellung des Antriebs. Die folgenden Verfahrensschritte werden im Betrieb wiederholt. Es folgt Schritt
b) Erzeugen eines aktuellen Hall-Signals des aktuellen Magnetfelds des Magnetfelderzeugers durch den Hall-Sensor. Diese Messung findet unter im Betrieb und damit unter den aktuellen Umgebungsbedingungen statt. Nun folgt Schritt
c) Vergleichen des Hall-Signals mit dem Kalibrier-Hall-Signal. In Schritt
d) werden Abweichungen des aktuellen Magnetfelds des Magnetfelderzeugers von dem Magnetfeld unter vorbestimmten Umgebungsbedingungen ermittelt. Unterschiede der Magnetfelder entstehen aufgrund der unterschiedlichen Umgebungsbedingungen bei der Kalibrierung und im Betrieb sowie durch Alterung des Feldes des Permanentmagneten. In Schritt
e) erfolgt das Ermitteln der Winkellage des Elektromotors aus dem Hall-Signal und den ermittelten Abweichungen des aktuellen Magnetfelds. Die ermittelten Abweichungen können zu einer Korrektur der Winkellage aus dem Hall-Signal führen, insbesondere bei extremen Temperaturen und bei hohem Alter des Sensors aufgrund einer Entmagnetisierung. In Schritt
f) erfolgt das Ansteuern des kommutierten Elektromotors aufgrund der Daten der ermittelten Winkellage.

Die Steuerung ermittelt die Entmagnetisierung des Permanentmagneten aus den ermittelten Abweichungen. Es wird nochmals darauf hingewiesen, dass die erfindungsgemäße Berücksichtigung der Alterung bzw. Entmagnetisierung des Permanentmagneten für alle Anordnungen des Permanentmagneten sowohl auf der Welle als auch ortsfest zum Stator im Falle des rotierenden weichmagnetischen Blechs gilt. Die Steuerung erzeugt ein Indikatorsignal bei zu geringer gemessener magnetischer Feldstärke des Permanentmagneten. Die Steuerung kompensiert magnetische Störfelder am Ort des Hall-Sensors durch Berücksichtigung bekannter Ströme durch Wicklungen des Elektromotors und bekannter Feldstärke des Permanentmagnetfeldes bei dem Kalibrieren und bei dem Erzeugen des aktuellen Hall-Signals.

Bei einem Elektromotor, der weiterhin einen AMR Sensor 13, 15 aufweist, verwendet die Steuerung das Signal des AMR Sensors zum Erreichen einer 360 Grad Eindeutigkeit.

## Patentansprüche

1. Kommutierter elektrischer Antrieb mit einem Elektromotor mit einer Sensoranordnung (1, 2, 3, 4), die einen Magnetfelderzeuger (5) auf einer Welle (10) des Elektromotors und einen analogen Hall-Sensor (11, 12, 14, 16) ortsfest zum Stator des Elektromotors gegenüber dem Magnetfelderzeuger (5) aufweist, und einer Steuerung zur Ansteuerung von Wicklungen des Elektromotors, wobei die Steuerung einen Speicher zum Speichern eines mit dem Hall-Sensor gemessenen Kalibrier-Hall-Signals des Magnetfelds des Magnetfelderzeugers (5) unter vorbestimmten Umgebungsbedingungen über eine Wellendrehung aufweist, und wobei die Steuerung eine Einrichtung zum Vergleichen eines mit dem Hall-Sensor (11, 12, 14, 16) gemessenen aktuellen Hall-Signals des aktuellen Magnetfelds des Magnetfelderzeugers (5) mit dem Kalibrier-Hall-Signal aufweist.

2. Kommutierter elektrischer Antrieb nach Anspruch 1, **dadurch gekennzeichnet, dass** der Magnetfelderzeuger (5) ein Permanentmagnet ist.

3. Kommutierter elektrischer Antrieb nach Anspruch 2, **gekennzeichnet durch** einen mehrpoligen Permanentmagnet (5) symmetrisch zur Wellenmitte (9) und einen linearen Hall-Sensor (11) neben der Wellenmitte (9).

4. Kommutierter elektrischer Antrieb nach Anspruch 2, **gekennzeichnet durch** einen mehrpoligen Permanentmagnet (5) symmetrisch zur Wellenmitte (9) und einen planaren Hall-Sensor (12) auf der Wellenmitte (9).

5. Kommutierter elektrischer Antrieb nach Anspruch 2, **gekennzeichnet durch** einen mehrpoligen Permanentmagnet (5) symmetrisch zur Wellenmitte (9), einen AMR Sensor auf der Wellenmitte (9) und einen linearen Hall-Sensor neben der Wellenmitte (9).

6. Kommutierter elektrischer Antrieb nach Anspruch 2, **gekennzeichnet durch** einen mehrpoligen Permanentmagnet (5) symmetrisch zur Wellenmitte (9), einen AMR Sensor auf der Wellenmitte (9) und einen planaren Hall-Sensor neben dem AMR Sensor.

7. Kommutierter elektrischer Antrieb nach Anspruch 1, **dadurch gekennzeichnet, dass** der Magnetfelderzeuger (5) ein weichmagnetisches Blech ist und ein Permanentmagnet ortsfest zum Stator des Elektromotors derart angeordnet ist, dass der Magnetfelderzeuger eine Störung des Magnetfelds des ortsfesten Permanentmagneten erzeugt.

8. Verfahren zur Ansteuerung eines kommutierten Elektromotors mit einer Sensoranordnung, die einen Magnetfelderzeuger auf einer Welle des Elektromotors und einen analogen Hall-Sensor ortsfest zum Stator des Elektromotors gegenüber dem Magnetfelderzeuger aufweist, mit den Schritten
a) Kalibrieren der Sensoranordnung mittels Erfassen und Speichern eines mit dem Hall-Sensor gemessenen Kalibrier-Hall-Signals des Magnetfelds des Magnetfelderzeugers unter vorbestimmten Umgebungsbedingungen über eine Wellendrehung;
b) Erzeugen eines aktuellen Hall-Signals des aktuellen Magnetfelds des Magnetfelderzeugers durch den Hall-Sensor;
c) Vergleichen des Hall-Signals mit dem Kalibrier-Hall-Signal;
d) Ermitteln von Abweichungen des aktuellen Magnetfelds des Magnetfelderzeugers von dem Magnetfeld unter vorbestimmten Umgebungsbedingungen;
e) Ermitteln der Winkellage des Elektromotors aus dem Hall-Signal und den ermittelten Abweichungen des aktuellen Magnetfelds;
f) Ansteuern des kommutierten Elektromotors aufgrund der Daten der ermittelten Winkellage.

9. Verfahren nach Anspruch 8, **dadurch gekennzeichnet, dass** der Magnetfelderzeuger (5) ein Permanentmagnet ist.

10. Verfahren nach Anspruch 8, **dadurch gekennzeichnet, dass** der Magnetfelderzeuger (5) ein weichmagnetisches Blech ist und ein Permanentmagnet ortsfest zum Stator des Elektromotors derart angeordnet ist, dass der Magnetfelderzeuger eine Störung des Magnetfelds des ortsfesten Permanentmagneten erzeugt

11. Verfahren nach Anspruch 9 oder 10, **gekennzeichnet durch** eine Ermittlung der Entmagnetisierung des Permanentmagneten aus den ermittelten Abweichungen.

12. Verfahren nach einem der Ansprüche 9 bis 11, **gekennzeichnet durch** ein Erzeugen eines Indikatorsignals bei zu geringer gemessener magnetischer Feldstärke des Permanentmagneten.

13. Verfahren nach einem der Ansprüche 9 bis 12, bei einem Elektromotor, der weiterhin einen AMR Sensor aufweist, wobei das Signal des AMR Sensors zum Erreichen einer 360 Grad Eindeutigkeit verwendet wird.

14. Verfahren nach einem der Ansprüche 9 bis 13, **gekennzeichnet durch** ein Kompensieren von magnetischen Störfeldern am Ort des Hall-Sensors **durch** Berücksichtigung bekannter Ströme **durch** Wicklungen des Elektromotors und bekannter Feldstärke des Permanentmagnetfeldes bei dem Kalibrieren und /oder bei dem Erzeugen des aktuellen Hall-Signals.

## Claims

1. Commutated electric drive with an electric motor with a sensor arrangement (1, 2, 3, 4), which has a magnetic field generator (5) on a shaft (10) of the electric motor and an analog Hall sensor (11, 12, 14, 16) fixed in position with respect to the stator of the electric motor opposite the magnetic field generator (5), and a controller for activating windings of the electric motor, the controller having a store for storing a calibrating Hall signal, measured by the Hall sensor, of the magnetic field of the magnetic field generator (5) under predetermined ambient conditions over a shaft revolution, and the controller having a device for comparing a present Hall signal, measured by the Hall sensor (11, 12, 14, 16), of the present magnetic field of the magnetic field generator (5) with the calibrating Hall signal.

2. Commutated electric drive according to Claim 1, **characterized in that** the magnetic field generator (5) is a permanent magnet.

3. Commutated electric drive according to Claim 2, **characterized by** a multi-pole permanent magnet (5) symmetrical to the shaft centre (9) and a linear Hall sensor (11) next to the shaft centre (9).

4. Commutated electric drive according to Claim 2, **characterized by** a multi-pole permanent magnet (5) symmetrical to the shaft centre (9) and a planar Hall sensor (12) on the shaft centre (9).

5. Commutated electric drive according to Claim 2, **characterized by** a multi-pole permanent magnet (5) symmetrical to the shaft centre (9), an AMR sensor on the shaft centre (9) and a linear Hall sensor next to the shaft centre (9).

6. Commutated electric drive according to Claim 2, **characterized by** a multi-pole permanent magnet (5) symmetrical to the shaft centre (9), an AMR sensor on the shaft centre (9) and a planar Hall sensor next to the AMR sensor.

7. Commutated electric drive according to Claim 1, **characterized in that** the magnetic field generator (5) is a soft-magnetic metal sheet, and a permanent magnet is arranged fixed in position with respect to the stator of the electric motor in such a way that the magnetic field generator generates interference in the magnetic field of the fixed permanent magnet.

8. Method for activating a commutated electric motor with a sensor arrangement, which has a magnetic field generator on a shaft of the electric motor and an analog Hall sensor fixed in position with respect to the stator of the electric motor opposite the magnetic field generator, said method comprising the following steps
a) calibrating the sensor arrangement by means of detecting and storing a calibrating Hall signal, measured by the Hall sensor, of the magnetic field of the magnetic field generator under predetermined ambient conditions over a shaft revolution;
b) generating a present Hall signal of the present magnetic field of the magnetic field generator by the Hall sensor;
c) comparing the Hall signal with the calibrating Hall signal;
d) determining discrepancies between the present magnetic field of the magnetic field generator and the magnetic field under predetermined ambient conditions;
e) determining the angular position of the electric motor from the Hall signal and the determined discrepancies in the present magnetic field;
f) activating the commutated electric motor on the basis of the data relating to the determined angular position.

9. Method according to Claim 8, **characterized in that** the magnetic field generator (5) is a permanent magnet.

10. Method according to Claim 8, **characterized in that** the magnetic field generator (5) is a soft-magnetic metal sheet, and a permanent magnet is arranged fixed in position with respect to the stator of the electric motor in such a way that the magnetic field generator generates interference in the magnetic field of the fixed permanent magnet.

11. Method according to Claim 9 or 10, **characterized by** determination of the demagnetization of the permanent magnet from the determined discrepancies.

12. Method according to one of Claims 9 to 11, **characterized by** generation of an indicator signal in the event of an excessively low measured magnetic field strength of the permanent magnet.

13. Method according to one of Claims 9 to 12, in the case of an electric motor which also has an AMR sensor, wherein the signal from the AMR sensor is used to achieve 360 degree unambiguity.

14. Method according to one of Claims 9 to 13, **characterized by** compensation of magnetic interference fields at the location of the Hall sensor by taking into consideration known currents through windings of the electric motor and the known field strength of the permanent magnet's field during calibration and/or during generation of the present Hall signal.

## Revendications

1. Mécanisme d'entraînement électrique commuté comprenant un moteur électrique muni d'un arrangement de capteurs (1, 2, 3, 4), lequel présente un générateur de champ magnétique (5) sur un arbre (10) du moteur électrique et un capteur à effet Hall (11, 12, 14, 16) analogique en position fixe par rapport au stator du moteur électrique à l'opposé du générateur de champ magnétique (5), et une commande pour commander les enroulements du moteur électrique, la commande présentant une mémoire pour enregistrer un signal Hall d'étalonnage du champ magnétique du générateur de champ magnétique (5) mesuré avec le capteur à effet Hall sous des conditions environnementales prédéfinies sur un tour de l'arbre, et la commande présentant un dispositif pour comparer un signal Hall actuel du champ magnétique actuel du générateur de champ magnétique (5) mesuré avec le capteur à effet Hall (11, 12, 14, 16) avec le signal Hall d'étalonnage.

2. Mécanisme d'entraînement électrique commuté selon la revendication 1, **caractérisé en ce que** le générateur de champ magnétique (5) est un aimant permanent.

3. Mécanisme d'entraînement électrique commuté selon la revendication 2, **caractérisé par** un aimant permanent (5) à pôles multiples symétrique par rapport au centre de l'arbre (9) et un capteur à effet Hall linéaire (11) à côté du centre de l'arbre (9).

4. Mécanisme d'entraînement électrique commuté selon la revendication 2, **caractérisé par** un aimant permanent (5) à pôles multiples symétrique par rapport au centre de l'arbre (9) et un capteur à effet Hall plan (12) sur le centre de l'arbre (9).

5. Mécanisme d'entraînement électrique commuté selon la revendication 2, **caractérisé par** un aimant permanent (5) à pôles multiples symétrique par rapport au centre de l'arbre (9), un capteur AMR sur le centre de l'arbre (9) et un capteur à effet Hall linéaire à côté du centre de l'arbre (9).

6. Mécanisme d'entraînement électrique commuté selon la revendication 2, **caractérisé par** un aimant permanent (5) à pôles multiples symétrique par rapport au centre de l'arbre (9), un capteur AMR sur le centre de l'arbre (9) et un capteur à effet Hall plan à côté du capteur AMR.

7. Mécanisme d'entrainement électrique commuté selon la revendication 1, **caractérisé en ce que** le générateur de champ magnétique (5) est une tôle magnétique douce et un aimant permanent est disposé en position fixe par rapport au stator du moteur électrique de telle sorte que le générateur de champ magnétique génère une perturbation du champ magnétique de l'aimant permanent en position fixe.

8. Procédé pour commander un moteur électrique commuté muni d'un arrangement de capteurs, lequel présente un générateur de champ magnétique sur un arbre du moteur électrique et un capteur à effet Hall analogique en position fixe par rapport au stator du moteur électrique à l'opposé du générateur de champ magnétique, comprenant les étapes suivantes
a) étalonnage de l'arrangement de capteurs au moyen de la détection et de l'enregistrement d'un signal Hall d'étalonnage du champ magnétique du générateur de champ magnétique mesuré avec le capteur à effet Hall sous des conditions environnementales prédéfinies sur un tour de l'arbre ;
b) génération d'un signal Hall actuel du champ magnétique actuel du générateur de champ magnétique avec le capteur à effet Hall ;
c) comparaison du signal Hall avec le signal Hall d'étalonnage ;
d) détermination d'écarts entre le champ magnétique actuel du générateur de champ magnétique et le champ magnétique sous les conditions environnementales prédéfinies ;
e) détermination de la position angulaire du moteur électrique à partir du signal Hall et des écarts déterminés du champ magnétique actuel ;
f) commande du moteur électrique commuté en se basant sur les données de la position angulaire déterminée.

9. Procédé selon la revendication 8, **caractérisé en ce que** le générateur de champ magnétique (5) est un aimant permanent.

10. Procédé selon la revendication 8, **caractérisé en ce que** le générateur de champ magnétique (5) est une tôle magnétique douce et un aimant permanent est disposé en position fixe par rapport au stator du moteur électrique de telle sorte que le générateur de champ magnétique génère une perturbation du champ magnétique de l'aimant permanent en position fixe.

11. Procédé selon la revendication 9 ou 10, **caractérisé par** une détermination de la démagnétisation de l'aimant permanent à partir des écarts déterminés.

12. Procédé selon l'une des revendications 9 à 11, **caractérisé par** une génération d'un signal indicateur en présence d'une intensité de champ magnétique mesurée trop faible de l'aimant permanent.

13. Procédé selon l'une des revendications 9 à 12, avec un moteur électrique qui présente en outre un capteur AMR, le signal du capteur AMR étant utilisé pour atteindre une univocité de 360 degrés.

14. Procédé selon l'une des revendications 9 à 13, **caractérisé par** une compensation de champs magnétiques parasites à l'endroit du capteur à effet Hall par une prise en compte de courants connus à travers les enroulements du moteur électrique et d'intensités de champ connues du champ magnétique permanent lors de l'étalonnage et/ou lors de la génération du signal Hall actuel.
